Europäisches Patentamt

European Patent Office

Office européen des brevets

(19)

(11) **EP 1 248 432 B1**

(12) **EUROPÄISCHE PATENTSCHRIFT**

(45) Veröffentlichungstag und Bekanntmachung des Hinweises auf die Patenterteilung:
**21.04.2004  Patentblatt 2004/17**

(51) Int Cl.⁷: **H04L 29/06**

(21) Anmeldenummer: **01810341.6**

(22) Anmeldetag: **04.04.2001**

(54) **Verfahren und System zum Abfragen von Zertifikatsinformationen unter Verwendung von dynamischen Zertifikatsreferenzen**

Method and system for querying certificate data using dynamical certificate references

Méthode et système d'interrogation de données de certificat utilisant des références de certificat dynamiques

(84) Benannte Vertragsstaaten:
**AT BE CH CY DE DK ES FI FR GB GR IE IT LI LU MC NL PT SE TR**

(43) Veröffentlichungstag der Anmeldung:
**09.10.2002  Patentblatt 2002/41**

(73) Patentinhaber: **Swisscom AG**
**3000 Bern 29 (CH)**

(72) Erfinder:
• **Cantini, Renato**
**1782 Belfaux (CH)**

• **Keusch, Beat**
**8006 Zürich (CH)**

(74) Vertreter: **BOVARD AG - Patentanwälte**
**Optingenstrasse 16**
**3000 Bern 25 (CH)**

(56) Entgegenhaltungen:
**WO-A-00/01108**

## Beschreibung

Die vorliegende Erfindung betrifft ein Verfahren und ein System zum Abfragen von Zertifikatsinformationen unter Verwendung von Zertifikatsreferenzen in einem Kommunikationsnetz, in welchem mindestens gewisse Teile der Informationen verschlüsselt übertragen werden und für die Verschlüsselung ein Public Key-Verschlüsselungsverfahren verwendet wird, wobei von einem Benutzer eines geheimen Schlüssels eine Zertifikatsreferenz an einen Informationsempfänger geschickt wird, die Zertifikatsreferenz vom Informationsempfänger an einen Server eines Zertifizierungsdiensteanbieters übermittelt wird, in welchem Server Zertifikatsinformationen verwaltet werden, im Server auf Grund der Zertifikatsreferenz Zertifikatsinformationen bereitgestellt werden, welche dem Benutzer des geheimen Schlüssels zugeordnet sind, und die bereitgestellten Zertifikatsinformationen vom Server an den Informationsempfänger übermittelt werden.

Die gesicherte Übertragung von Informationen in Kommunikationsnetzen gewinnt heute zunehmend an Bedeutung. Dabei geht es nicht nur darum, den unbefugten Zugriff auf die übertragenen Informationen zu verhindern, sondern auch darum, die Integrität der übertragenen Informationen zu verifizieren und den Absender der Informationen zu identifizieren. Zu diesem Zweck werden die übertragenen Informationen verschlüsselt und/oder mit einer digitalen Unterschrift versehen, wobei sich die Verschlüsselung gegebenenfalls auf die digitale Unterschrift beschränken kann. Die Verschlüsselung digitaler Unterschriften basiert normalerweise auf einem asymmetrischen Verschlüsselungsverfahren. (Siehe z.B. Bruce Schreier in " Applied Cryptography", Verlag John Wiley and Sons Inc., New York 1995.) In einem solchen asymmetrischen Verschlüsselungsverfahren werden für die Benutzer individuelle Schlüsselpaare generiert, bestehend aus einem geheimen Schlüssel (Englisch: private key), welcher nur dem einzelnen Benutzer bekannt ist, und einem öffentlichen Schlüssel (Englisch: public key), welcher von mehreren Informationsempfängern verwendet werden kann, um die von einem Benutzer mit Hilfe des geheimen Schlüssels verschlüsselten Informationen zu entschlüsseln. Durch das Entschlüsseln der verschlüsselten Informationen mittels des öffentlichen Schlüssels kann ein Informationsempfänger die verschlüsselten Informationen eindeutig einem bestimmten Absender zuordnen, nämlich dem Benutzer des zugehörigen geheimen Schlüssels. Ein solches Verschlüsselungsverfahren wird auch als Public Key-Verschlüsselungsverfahren bezeichnet. Dabei ist einerseits entscheidend, dass der geheime Schlüssel von dessen Benutzer geheim gehalten wird, und andererseits, was die Verfahren aus dem Stand der Technik betrifft, dass sich ein Informationsempfänger den zum Entschlüsseln benötigten öffentlichen Schlüssel sowie zuverlässige Informationen bezüglich der Identität des Benutzers des zugehörigen geheimen Schlüssels beschaffen kann. Um dem Informationsempfänger die benötigten Informationen zur Verfügung zu stellen, wurden sogenannte Public Key-Zertifikate (im Folgenden kurz Zertifikate genannt) geschaffen, welche von einer autorisierten Stelle (auch Zertifizierungsstelle oder englisch'certification authority' oder 'CA' genannt) ausgestellt werden, und welche zwecks Verifikation der Echtheit mit einer digitalen Unterschrift der Zertifizierungsstelle versehen sind. Die Zertifikate können u.a. folgende Informationen enthalten:

- die Identität des Benutzers des geheimen Schlüssels,
- den zugehörigen öffentlichen Schlüssel,
- die Bezeichnung der Algorithmen, mit welchen der öffentliche Schlüssel benützt werden kann,
- die laufende Nummer des Zertifikats,
- Beginn und Ende der Gültigkeit des Zertifikats,
- den Namen der Zertifizierungsstelle, und
- Angaben über die Einschränkung der Nutzung auf bestimmte Anwendungen (Zertifikatsklasse).

Die Zertifikate bilden zusammen mit den Zertifizierungsstellen die Grundlage für die sogenannte Public Key-Infrastruktur, welche als entscheidend angesehen wird für die Entwicklung des elektronischen Handels und weiterer Applikationen, wie beispielsweise der elektronischen Verwaltung. Typische Anwendungen, welche sich auf eine Public Key-Infrastruktur stützen, sind beispielsweise elektronische Verträge zwischen Firmen, elektronisches Einkaufen und Bezahlen durch private Kunden, sichere E-Mails, oder auch die Identifizierung von Wählern in elektronischen Wahlen. Dank der Zertifikate und der Public Key-Infrastruktur wird die Aufgabe der Informationsempfänger, die Integrität der übermittelten Informationen zu verifizieren und den Absender der Informationen zu identifizieren, stark vereinfacht. Es wird davon ausgegangen, dass der Informationsempfänger bereits einen öffentlichen Schlüssel der Zertifizierungsstelle besitzt und darauf vertraut, dass die Zertifizierungsstelle gültige Zertifikate ausgibt. Benötigt der Informationsempfänger den öffentlichen Schlüssel und die Identität eines beliebigen, von der Zertifizierungsstelle zertifizierten Benutzers eines geheimen Schlüssels, braucht er lediglich eine Kopie eines Zertifikates des betreffenden Benutzers zu beschaffen, daraus den betreffenden öffentlichen Schlüssel zu entnehmen und die digitale Unterschrift der Zertifizierungsstelle mit deren öffentlichem Schlüssel zu verifizieren. Dabei sind die Zertifikate nur solange von Wert für den Informationsempfänger, als er darauf vertraut, dass die Zertifizierungsstelle ausschliesslich gültige Zertifikate ausgibt. Die Zertifizierungsstelle hat somit in dieser Hinsicht eine Vertrauensposition (Rolle einer 'trusted third party') für den Informationsempfänger (Englisch: relying party), der sich in seinen geschäftlichen Transaktionen auf die Zertifizierungsstelle verlässt. Man kann das obigen Schema auch benützen, um die öffentlichen Schlüssel von weiteren Zertifizierungsstellen zu erhalten, so dass auf die öffentlichen Schlüssel einer immer grösseren Anzahl von weiter entfernten Benutzern zugegriffen werden kann. Dies führt zum allgemeinen Modell der sogenannten Zertifikatskette (English: certificate chain or certification path), auf dem alle grossen Verteilsysteme für Zertifikate aufgebaut sind.

Da vom Sicherheitsstandpunkt her keine Notwendigkeit besteht, die Zertifikate geheim zu halten, können sie in einer Zertifikatsablage (Englisch: certificate repository) abgelegt werden, von wo sie abrufbar sind. Um das Risiko, welches mit dem Gebrauch von Zertifikaten verbunden ist, zu beschränken, muss der Informationsempfänger zusätzlich den Status eines von ihm verwendeten Zertifikates kennen, d.h. ob das Zertifikat z.B. aktiv, zurückgenommen oder widerrufen ist. Aus diesem Grund sollte der Informationsempfänger den Status des Zertifikates an Hand einer sogenannten Certificate Revocation List (CRL) überprüfen (betreffend CRL siehe beispielsweise Internet Standard RFC 2459, Internet X.509 Public Key Infrastructure, Certificate and CRL Profile, dated Jan. 1999).

Das Zertifikat kann direkt vom Benutzer des geheimen Schlüssels an den Informationsempfänger übermittelt werden. Wahlweise kann der Benutzer des geheimen Schlüssels auch eine Referenz für das betreffende Zertifikat (im Folgenden als Zertifikatsreferenz bezeichnet) an den Informationsempfänger übermitteln, womit der Informationsempfänger die Möglichkeit erhält, das betreffende Zertifikat unter Verwendung der Zertifikatsreferenz von einer Zertifikatsablage abzurufen. Die Zertifikatsreferenz kann beispielsweise als URL-Adresse oder -Pointer (Uniform Resource Locator) realisiert sein. Die Verwendung von Zertifikatsreferenzen wird z.B. durch den WTLS Sicherheits-Layer im Wireless Application Protocol (WAP) (siehe WAP-1999-WTLS, Version 18-Feb-2000) und das WML Script Crypto API unterstützt (siehe WAP-1999-WML Script Crypto, Version Nov-1999).

Die Patentschrift **US 5'420'926** beschreibt ein anonymes Kreditkarten-Transaktionssystem, in welchem sämtliche Verbindungen über eine zentrale Communications Exchange laufen, welche als Anonymizer wirkt. Das System verwendet eine Public Key-Verschlüsselung, wobei sämtliche Meldungen doppelt verschlüsselt werden, sodass alle Beteiligten (Communications Exchange, Banken, Kunden und Zahlstationen) nur diejenigen Teile einer Meldung lesen können, die sie direkt betreffen.

Die Patentschrift **US 6'061'789** beschreibt ein Verfahren zum sicheren, anonymen Informationsaustausch in einem Kommunikationsnetz. In dem Verfahren wird ein anonymes Kommunikationsnetz verwendet, um die Adresse des Absenders geheim zu halten. Weiter umfasst das Kommunikationsnetz eine Public Key-Infrastruktur. Durch die Verwendung einer modifizierten Unterschrift bestehend aus einem Hash-Funktionswert, welcher durch eine Zufallszahl verändert wird, bleibt der erste Benützer (meist der Kunde) anonym, solange er dies wünscht.

Die Patentschrift **US 6'108'644** beschreibt ein System und ein Verfahren für elektronische Transaktionen, in welchen Zertifikate verwendet werden, welche mittels einer Hash-Funktion und zusätzlich mittels Blinding erzeugt werden und zusammen mit "Autorisierungsdaten", beispielsweise einer Zahlung, zur Validierung eingereicht werden, sodass die Zertifizierungsstelle nur die "Autorisierungsdaten" bestätigt, ohne den Anmelder zu kennen (ähnlich einer elektronischen Banknote). Mit jeder Transaktion wird ein neues, mittels Blinding erzeugtes Zertifikat validiert, sodass keine Zusammenhänge zwischen verschiedenen Transaktionen hergestellt werden können.

Die Patentschrift **US 6'154'841** beschreibt ein System und Verfahren für digitale Unterschriften. Das Verfahren basiert auf einem Zero Knowledge Proof und anonymen Public Key-Zertifikaten, sodass ein Empfänger verifizieren kann, dass ein bestimmter Absender eine Meldung unterschrieben hat, ohne dass der Empfänger die Identität des Absenders kennt. Die Unterschrift enthält eine Zufallszahl, sodass die Unterschrift von einer Verwaltungsstelle, beispielsweise einer Certification Authority, geändert werden kann.

Die Patentschrift **US 5'903'882** beschreibt ein System und ein Verfahren für die Bestätigung von Zertifikaten. Das System umfasst insbesondere einen sogenannten "Vertrauensserver" (Englisch: reliance server), welcher Informationen über die Benutzer geheimer Schlüssel und deren Zertifikate verwaltet. In dem in der Patentschrift US 5'903'882 beschriebenen Verfahren erteilt eine Zertifizierungsstelle sogenannte erste Zertifikate, welche wie gewöhnliche Zertifikate verwendet werden. Ein Benutzer eines geheimen Schlüssels übermittelt Informationen betreffend eine Transaktion, welche mit einer digitalen Unterschrift versehen sind, an einen Informationsempfänger (Englisch: relying party), wobei die übermittelten Informationen auch ein (erstes) Zertifikat oder eine Zertifikatsreferenz umfassen. Der Informationsempfänger übermittelt einen die Transaktion betreffenden Antrag um Unterstützung an den Vertrauensserver, welcher die im Unterstützungsantrag enthaltenen Informationen und die im Server verwalteten Informationen betreffend das Zertifikat des Benutzers des geheimen Schlüssels überprüft. Basierend auf dieser Überprüfung übermittelt der Vertrauensserver eine Bestätigung in Form eines zweiten Zertifikates an den Informationsempfänger.

WO 0 001 108 offenbart ein Verfahren zur anonymen Kommunikation, wobei ein erstes Zertifikat den Sender bei dem zwischengeschalteten Server, und ein zweites Zertifikat den pseudo-Identität des Senders bei dem Empfänger autentifiziert.

Die Verfahren aus dem Stand der Technik haben den Nachteil, dass die Public key-Infrastruktur-Provider je nach Anwendung keine direkten Einnahmen erzielen können, während die Informationsempfänger (relying parties) zwar von der Public Key-Infrastruktur profitieren, diese aber weitgehend kostenlos benützen. Dies gilt auch für das in der Patentschrift US 5'903'882 beschriebenen Verfahren, in welchem ein Benutzer eines geheimen Schlüssels ein erstes Zertifikat oder eine Zertifikatsreferenz übermittelt, auf Grund welcher ein Informationsempfänger den betreffenden Benutzer identifizieren kann. Lediglich im Fall, in welchem der Informationsempfänger zusätzliche Sicherheiten wünscht und die Dienste des Vertrauensservers in Anspruch nimmt, muss er gegebenenfalls in dem in der Patentschrift US 5'903'882 beschriebenen Verfahren für diese zusätzlichen Dienste bezahlen.

Ein weiterer gravierenden Nachteil der Verfahren aus dem Stand der Technik ist der mangelhafte Schutz der Privatsphäre. Die Verwendung einer Public Key-Infrastruktur eröffnet auf Grund ihrer Eigenheiten die Möglichkeit, Benutzer und deren Transaktionen zu überwachen. Zu jeder Transaktion, welche mittels eines geheimen Schlüssels geschützt ist, kann von jedermann die Identität des betreffenden Benutzers an Hand des zugehörigen Zertifikates festgestellt oder seine Aktivitäten verfolgt werden (Tracing/Mapping).

Es ist eine Aufgabe der vorliegenden Erfindung, ein neues Verfahren und ein neues System zum Abfragen von Zertifikatsinformationen unter Verwendung von dynamischen Zertifikatsreferenzen vorzuschlagen, welche die oben erwähnten Nachteile im Stand der Technik vermeidet.

Gemäss der vorliegenden Erfindung wird dieses Ziel insbesondere durch die Merkmale der unabhängigen Ansprüche erreicht. Weitere vorteilhafte Ausführungsformen gehen ausserdem aus den abhängigen Ansprüchen und aus der Beschreibung hervor.

Die vorliegende Erfindung beschreibt ein Verfahren und System zum Abfragen von Zertifikatsinformationen unter Verwendung von Zertifikatsreferenzen in einem Kommunikationsnetz, beispielsweise im Internet, Internet Mobile oder in einem Mobilfunktelefonnetz, z.B. in einem UMTS-, GSM- oder satellitenbasierten Mobilfunktelefonnetz, unter Verwendung von SMS (Short Message Service), USSD (Unstructured Supplemetary Service Data), oder WAP (Wireless Application Protocol), in welchem Kommunikationsnetz mindestens gewisse Teile der Informationen verschlüsselt übertragen werden, und für die Verschlüsselung ein Public Key-Verschlüsselungsverfahren eingesetzt wird, wobei individuelle Schlüsselpaare bestehend aus einem geheimen und einem öffentlichen Schlüssel verwendet werden, und in mindestens einem Server eines Zertifizierungsdiensteanbieters Zertifikatsinformationen verwaltet werden, welche beispielsweise den zu einem geheimen Schlüssel gehörenden öffentlichen Schlüssel und Informationen betreffend den Benutzer des geheimen Schlüssels enthalten. Der Zertifizierungsdiensteanbieter übernimmt im erfindungsgemässen Verfahren gegenüber dem Informationsempfänger (Englisch: relying party) eine Vertrauensposition (Rolle einer'trusted third party'), weshalb im Folgenden die Bezeichnung 'Zertifizierungsdiensteanbieter' gleichbedeutend mit 'Trusted Third Party' verwendet wird. Im erfindungsgemässen Verfahren wird eine Zertifikatsreferenz, beispielsweise ein URL (Uniform Resource Locator) wie z.B. ein HTTP-URL, LDAP-URL, FTP-URL o.ä., von einem Benutzer eines geheimen Schlüssels an einen Informationsempfänger geschickt; die Zertifikatsreferenz vom Informationsempfänger an einen Server eines Zertifizierungsdiensteanbieters übermittelt, in welchem Server Zertifikatsinformationen verwaltet werden; im Server werden auf Grund der Zertifikatsreferenz Zertifikatsinformationen bereitgestellt, welche dem Benutzer des geheimen Schlüssels zugeordnet sind; und die bereitgestellten Zertifikatsinformationen vom Server an den Informationsempfänger übermittelt, wobei die Zertifikatsreferenz, welche vom Benutzer des geheimen Schlüssels an den Informationsempfänger geschickt wird, mittels eines Codierungsschemas erzeugt wird, welches beispielsweise auf einer Pseudo-Zufallsfolge basiert. Auf Grund des Codierungsschemas wird die codierte Zertifikatsreferenz nach ein- oder mehrmaligem Gebrauch gewechselt. Weiter verhindert das Codierungsschema, dass der codierten Zertifikatsreferenz durch den Informationsempfänger Zertifikatsinformationen, insbesondere Informationen betreffend die Identität des Benutzers des geheimen Schlüssels und/oder den öffentlichen Schlüssel, welcher zum geheimen Schlüssel gehört, entnommen werden können. Selbstverständlich kann das erfindungsgemässe Verfahren und System auch mehrere Benutzer von geheimen Schlüsseln und mehrere Informationsempfänger umfassen.

Vorteilhafterweise werden in Informationen, welche der Benutzer des geheimen Schlüssels an den Informationsempfänger schickt, abgesehen von der Zertifikatsreferenz alle Zertifikatsinformationen weggelassen oder entfernt, beispielsweise indem die Zertifikatsinformationen beim Bereitstellen oder bei der Übermittlung automatisch herausgefiltert werden.

Der Einfachheit halber wird im Zusammenhang mit der vorliegenden Erfindung immer vom 'Benutzer des geheimen Schlüssels' gesprochen. Dabei kann es sich in der Praxis beispielsweise um eine Einzelperson handeln, aber auch um mehrere Personen, eine Firma, Organisation, Organisationseinheit, einen Computer, Server, oder eine Vorrichtung, wie z.B. eine intelligente Chipkarte (Englisch: smart card), oder um eine Applikation. Es wird deshalb im Zusammenhang mit der vorliegenden Erfindung davon ausgegangen, dass, soweit anwendbar, immer alle diese Bedeutungen gemeint sind. Die erwähnte Identität des Benutzers des geheimen Schlüssels kann beispielsweise einen Namen einer Person, Firma, Organisation, einen Namen mit Ortsangabe, eine E-Mail-Adresse, ein Pseudonym oder eine Identifizierung einer Vorrichtung, o.ä. umfassen.

In einer Ausführungsvariante enthalten die Zertifikatsinformationen, welche vom Server an den Informationsempfänger übermittelt werden, Informationen betreffend den Status eines Zertifikates, welches dem Benutzer des geheimen Schlüssels zugeordnet ist.

In einer Ausführungsvariante enthalten die Zertifikatsinformationen, welche vom Server an den Informationsempfänger übermittelt werden, ein Zertifikat, welches dem Benutzer des geheimen Schlüssels zugeordnet ist.

In einer Ausführungsvariante werden im Server des Zertifizierungsdiensteanbieters auf Grund der Zertifikatsreferenz zusätzliche Überprüfungen betreffend den Benutzer des geheimen Schlüssels durchgeführt, und das Resultat dieser Überprüfungen vom Server an den Informationsempfänger übermittelt.

In einer Ausführungsvariante sind in den Zertifikatsinformationen, welche vom Server an den Informationsempfänger übermittelt werden, Informationen betreffend die Identität des Benutzers des geheimen Schlüssels durch ein Pseudonym ersetzt.

In einer Ausführungsvariante wird vom Benutzer des geheimen Schlüssels zusätzlich zur Zertifikatsreferenz eine digitale Unterschrift, welche unter Verwendung des genannten geheimen Schlüssels erstellt wurde, an den Informationsempfänger geschickt.

In einer Ausführungsvariante werden vom Benutzer des geheimen Schlüssels zusätzlich zur Zertifikatsreferenz verschlüsselte Informationen, welche mit dem genannten geheimen Schlüssel verschlüsselt wurden, insbesondere eine digitale Unterschrift, welche unter Verwendung des genannten geheimen Schlüssels erstellt wurde, an den Informationsempfänger geschickt und die verschlüsselten Informationen zusammen mit der Zertifikatsreferenz vom Informationsempfänger an den Server des Zertifizierungsdiensteanbieters übermittelt, worauf im Server auf Grund der Zertifikatsreferenz und der verschlüsselten Informationen die Identität des Benutzers des geheimen Schlüssels verifiziert wird, und das Resultat dieser Verifikation vom Server an den Informationsempfänger übermittelt wird.

Vorteilhafterweise erfolgt die Bereitstellung der Zertifikatsinformationen im Server und die Übermittlung der Zertifikatsinformationen an den Informationsempfänger gegen Verrechnung.

In einer Ausführungsvariante werden aus den Informationen, welche vom Benutzer des geheimen Schlüssels an den Informationsempfänger geschickt werden, abgesehen von der Zertifikatsreferenz alle Zertifikatsinformationen herausgefiltert, welche dem Benutzer des geheimen Schlüssels zugeordnet sind.

Vorteilhafterweise hat eine Applikation im Server Kenntnis vom Codierungsschema, welches für die Erzeugung der codierten Zertifikatsreferenz verwendet wird, und bestimmt auf Grund dieser Kenntnis aus der codierten Zertifikatsreferenz den Benutzer des geheimen Schlüssels und/oder dessen uncodierte Zertifikatsreferenz.

Vorteilhafterweise wird als Codierungsschema eine Tabelle oder ein dynamisches Schema verwendet.

In einer Ausführungsvariante enthalten die Zertifikatsinformationen, welche vom Server an den Informationsempfänger übermittelt werden, an Stelle standardmässiger Zertifikate lediglich den entsprechenden öffentlichen Schlüssel, welcher zum geheimen Schlüssel des genannten Benutzers gehört.

Die Verwendung von Zertifikatsreferenzen im erfindungsgemässen Verfahren und System bringt v.a. für kleine und mobile Geräte, wie z.B. Mobilfunktelefone, intelligente Chipkarten, Uhren, usw., Vorteil, da sie wenig Speicherplatz und Übermittlungsbandbreite beansprucht. Indem der Benutzer eines geheimen Schlüssels gegenüber einem Informationsempfänger im ersten Teil des erfindungsgemässen Verfahrens anonym bleibt, ist der Informationsempfänger gezwungen, sich die Zertifikatsinformationen von einem Zertifizierungsdiensteanbieter zu beschaffen. Dies gibt dem Zertifizierungsdiensteanbieter die Möglichkeit, die gewünschten Zertifikatsinformationen gegen Verrechnung zur Verfügung zu stellen. Ein weiterer Vorteil des erfindungsgemässen Verfahrens ist der Schutz der Privatsphäre des Benutzers des geheimen Schlüssels. Als zusätzliche Dienstleistung kann der Zertifizierungsdiensteanbieter dem Benutzer des geheimen Schlüssels ermöglichen, gegenüber dem Informationsempfänger anonym zu bleiben. Weiter wird durch den laufenden Wechsel der Zertifikatsreferenz im erfindungsgemässen Verfahren verhindert, dass die Aktivitäten eines Benutzers eines geheimen Schlüssels auf Grund der Zertifikatsreferenz ohne Einverständnis des Benutzers des geheimen Schlüssels und des Zertifizierungsdiensteanbieters verfolgt werden können.

Die Ausführungsbeispiele zur vorliegenden Erfindung werden anhand der folgenden Figuren näher beschrieben:

Fig. 1 zeigt ein Ausführungsbeispiel des Hardware-Aufbaus eines Systems gemäss der vorliegenden Erfindung.

Fig. 2 zeigt ein Blockdiagramm der Softwarekomponenten in einem Ausführungsbeispiel gemäss der vorliegenden Erfindung.

Fig. 3 zeigt ein Blockdiagramm, das einen Teil des Verfahrensablaufes des zweiten Ausführungsbeispieles gemäss der vorliegenden Erfindung illustriert, welcher sich durch die Validierung der Unterschrift des Benutzers des geheimen Schlüssels vom gleichen Verfahrensablaufteil des ersten Ausführungsbeispiels unterscheidet.

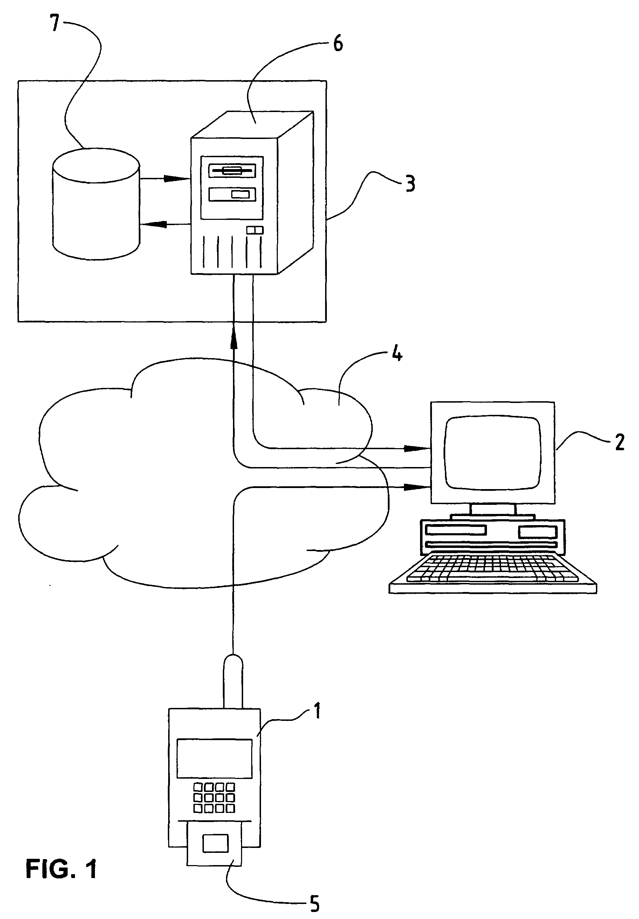

Fig. 1 illustriert in schematischer Weise den prinzipiellen Hardware-Aufbau eines Systems gemäss einem Ausführungsbeispiel zur vorliegenden Erfindung. Bezugsnummer 1 bezeichnet ein Kommunikationsendgerät eines Benutzers eines geheimen Schlüssels und Bezugsnummer 2 ein Kommunikationsendgerät eines Informationsempfängers, Bezugsnummer 3 einen Server eines Zertifizierungsdiensteanbieters und Bezugsnummer 4 ein Kommunikationsnetz. Bei den Kommunikationsendgeräten 1 und 2 kann es sich beispielsweise um Computer wie z.B. Server, PC, Notebook- oder Palmtop-Computer handeln, welche mit einem Modem oder Kommunikationsadapter ausgerüstet sind, oder um Mobilfunktelefone wie z.B. GSM- oder UMTS-Mobilfunktelefone. Die Kommunikationsendgeräte 1 und 2 können zusätzlich mit Lese- oder Kontaktiervorrichtungen zur Aufnahme von intelligenten Chipkarten (Englisch: smart cards) ausgerüstet sein. GSM- oder UMTS-Mobilfunktelefone verfügen bereits standardmässig über eine SIM (Subscriber Identification Modul) -Karte. Wahlweise können auch Kommunikationsendgeräte mit gesicherten Hardware-Komponenten verwendet werden. Im Ausführungsbeispiel ist das Kommunikationsendgerät 1 mit einer Lesevorrichtung ausgestattet, in welche eine intelligente Chipkarte 5 eingesetzt ist. Das Kommunikationsendgerät 1 des Benutzers eines geheimen Schlüssels kommuniziert über das Kommunikationsnetz 4, beispielsweise über Internet, Internet Mobile, oder ein Festnetz oder über ein Mobilfunktelefonnetz, z.B. über ein UMTS-, GSM- oder satellitenbasiertes Mobilfunktelefonnetz, unter Verwendung von SMS (Short Message Service), USSD (Unstructured Supplemetary Service Data), oder WAP (Wireless Application Protocol), oder über eine Kombination dieser Kommunikationsnetze, mit dem Kommunikationsendgerät 2 des Informationsempfängers. Weiter kommuniziert das Kommunikationsendgerät 2 über das Kommunikationsnetz 4 mit dem Server 3 des Zertifizierungsdiensteanbieters. Der Server 3 kann auf einem grösseren Computersystem implementiert sein, oder auch als einzelner Server oder Proxy-Server ausgeführt sein. Bezugsnummer 6 bezeichnet eine Rechen- und Kommunikationseinheit im Server 3 und Bezugsnummer 7 einen Massenspeicher, welcher eine Datenbank enthält. Selbstverständlich kann das erfindungsgemässe System Kommunikationsendgeräte von mehreren Benutzern geheimer Schlüssel und Kommunikationsendgeräte von mehreren Informationsempfängern umfassen.

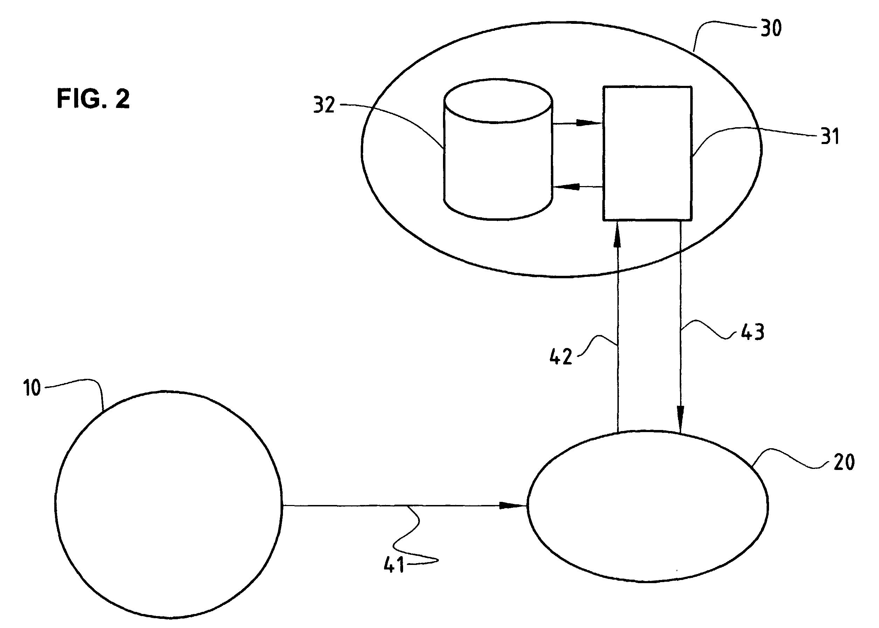

Fig. 2 illustriert in schematischer Weise die Softwarekomponenten und ihre Interaktion in einem Ausführungsbeispiel gemäss der vorliegenden Erfindung. Zur Kennzeichnung der Hardwarekomponenten, welche in der nachstehenden Erläuterung erwähnt sind, werden die Bezugsnummern von Fig. 1 verwendet. Bezugsnummer 10 bezeichnet ein Client-Programm, welches im Kommunikationsendgerät 1 eines Benutzers eines geheimen Schlüssels installiert ist, oder in einer gesicherten Hardware-Komponente im Kommunikationsendgerät 1 oder in einer intelligenten Chipkarte 5 des Benutzers eines geheimen Schlüssels, welche in einer Lesevorrichtung des Kommunikationsendgerätes 1 eingesetzt ist, Bezugsnummer 20 ein weiteres Client-Programm, welches im Kommunikationsendgerät 2 eines Informationsempfängers oder in einer im Kommunikationsendgerät 2 eingesetzten intelligenten Chipkarte installiert ist, Bezugsnummer 31 ein im Server 3 eines Zertifizierungsdiensteanbieters installiertes Server-Programm, Bezugsnummer 32 eine Datenbank, welche im Massenspeicher 7 gespeichert ist, und die Bezugsnummern 41, 42 und 43 bezeichnen Kommunikationskanäle, welche im Kommunikationsnetz 4 realisiert sind. In der Datenbank 32 sind Zertifikate von Benutzern geheimer Schlüssel gespeichert sowie wahlweise weitere Informationen, welche die Benutzer der geheimen Schlüssel betreffen, wie z.B. Kreditwürdigkeit, genaue Adresse, Aktivitäten, Firmengrösse, usw.. Im erfindungsgemässen System kommuniziert das Client-Programm 10 im Kommunikationsendgerät 1 über den Kommunikationskanal 41 mit dem Client-Programm 20 im Kommunikationsendgerät 2 eines Informationsempfängers, das Client-Programm 20 kommuniziert über den Kommunikationskanal 42 mit dem Server-Programm 31 im Server 3 eines Zertifizierungsdiensteanbieters, und das Server-Programm 31 kommuniziert über den Kommunikationskanal 43 mit dem Client-Programm 20. Die Kommunikationskanäle 42 und 43 können auch in einem bidirektionalen Kommunikationskanal zusammengefasst sein.

Im vorliegenden Ausführungsbeispiel schickt ein Benutzer eines geheimen Schlüssels unter Verwendung eines Kommunikationsgerätes 1 und eines Client-Programms 10 eine Meldung M1 an ein Client-Programm 20 im Kommunikationsgerät 2 eines Informationsempfängers. Die Meldung M1 umfasst eine digitale Unterschrift, welche mit dem geheimen Schlüssel des betreffenden Benutzers erzeugt wurde, und eine codierte Zertifikatsreferenz sowie wahlweise weitere Informationen, wie beispielsweise einen Meldungsinhalt oder Zeitstempel (Englisch: time stamp):

$$M1 = \text{sign}(K_{pr})[c] \, \| \text{CertRef'} \| \, \langle c \rangle, \langle t \rangle, \langle n \rangle$$

Dabei bedeutet:

| | |
|---|---|
| c | einen Meldungsinhalt, beispielsweise Informationen betreffend eine Transaktion, |
| $K_{pr}$ | den geheimen Schlüssel des Benutzers, |
| $\text{sign}(K_{pr})[c]$ | eine digitale Unterschrift des Meldungsinhaltes c, welche mit dem geheimen Schlüssel $K_{pr}$ erzeugt wurde, |
| CertRef' | eine codierte Zertifikatsreferenz, und |
| $\langle c \rangle, \langle t \rangle, \langle n \rangle$ | wahlweise angefügte Informationen wie z.B. den Meldungsinhalt, einen Zeitstempel oder eine Zufallszahl. |

In der Meldung M1 und den darin enthaltenen Informationen, welche vom Client-Programm 10 im Kommunikationsgerät 1 des Benutzers des geheimen Schlüssels an das Client-Programm 20 im Kommunikationsgerät 1 des Informationsempfängers geschickt werden, werden abgesehen von der Zertifikatsreferenz alle Zertifikatsinformationen, insbesondere Informationen betreffend die Identität des Benutzers des geheimen Schlüssels und/oder den öffentlichen Schlüssel, welcher zum geheimen Schlüssel gehört, weggelassen oder entfernt. Das kann beispielsweise dadurch erreicht werden, dass das Client-Programm 10 alle Zertifikatsinformationen in der Meldung M1 unterdrückt oder herausfiltert, oder dass der Netzbetreiber die Zertifikatsinformationen bei der Übermittlung vom Client-Programm 10 an das Client-Programm 20 herausfiltert. Das Weglassen oder Entfernen der Zertifikatsinformationen ist notwendig, damit der Benutzer des geheimen Schlüssels dem Informationsempfänger vorerst unbekannt ist, und der Informationsempfänger gezwungen ist, die Zertifikatsinformationen vom Zertifizierungsdiensteanbieter zu beziehen. Weiter besteht damit die Möglichkeit, dass der Benutzer des geheimen Schlüssels gegenüber dem Informationsempfänger anonym bleibt.

Aus dem selben Grund werden auch die Zertifikatsreferenzen im erfindungsgemässen Verfahren codiert. Eine codierte Zertifikatsreferenz kann beispielsweise mit einer Codierungsfunktion aus einer Vorlage (Englisch: template) und einer zusätzlichen Variablen berechnet werden:

$$CertRef' = f(Templ_{cl}, v_i)$$

Dabei bedeutet:

$f$ eine Codierungsfunktion
$Templ_{cl}$ eine Vorlage,
$v_i$ eine zusätzliche Variable des Benutzers des geheimen Schlüssels.

Die zusätzliche Variable $v_i$ kann beispielsweise aus einem fortlaufenden Zähler bestehen oder mittels einer Pseudo-Zufallsfolge gebildet werden. Die Variable erlaubt, die codierte Zertifikatsreferenz in einfacher Weise zu ändern, und damit die Forderung nach einem dynamischen Codierungsschema zu erfüllen. Zweckmässigerweise wird für jede neue Meldung ein neuer Variablenwert bestimmt, der sich von den bisherigen Werten unterscheidet.

Die Codierungsfunktion kann beispielsweise mittels einer Tabelle realisiert werden. Zu diesem Zweck wird im Server für jeden Benutzer eines geheimen Schlüssels eine individuelle Tabelle mit Zufallszahlen erzeugt und unter der Identität des Benutzers gespeichert, wobei in einer einfachen Ausführungsvariante jede Zufallszahl nur einmal vorkommt. Die Tabellen werden z. B. während der Initialisierung gesichert an die jeweiligen Client-Programme der Benutzer der geheimen Schlüssel übermittelt. Wird eine codierte Zertifikatsreferenz benötigt, entnimmt ein Client-Programm der Tabelle einfach die nächste Zufallszahl. Bei der Auswertung im Server kann das Server-Programm auf Grund der gespeicherten Tabellen die Zufallszahl eindeutig einem bestimmten Benutzer eines geheimen Schlüssels zuordnen. Die Codierungsfunktion kann z.B. auch mittels eines Verschlüsselungsverfahrens realisiert werden. Die Vorlage enthält in diesem Fall beispielsweise die Adresse eines Servers des gewünschten Zertifizierungsdiensteanbieters. Die Variable kann beispielsweise aus einer Zeichenfolge bestehen, welche aus dem Zählerstand eines fortlaufenden Zählers und der Identität des Benutzers des geheimen Schlüssels gebildet wird. Um die codierte Zertifikatsreferenz zu erhalten, wird die Variable verschlüsselt, beispielsweise mit dem öffentlichen Schlüssel des Zertifizierungsdiensteanbieters. Im Server kann die verschlüsselte Variable mit dem geheimen Schlüssel des Zertifizierungsdiensteanbieters entschlüsselt, und an Hand der Variablen die Identität des Benutzers des geheimen Schlüssels ermittelt werden. Weiter kann die Codierungsfunktion beispielsweise auch mittels eines der folgenden dynamischen Schemas realisiert werden:

- eine Pseudo-Zufallsfolge, wobei für jeden Benutzer eines geheimen Schlüssels ein eigener Startwert festgelegt wird, oder

- eine Hash-chain, indem aus einem Code, welcher mittels einer Hash-Funktion erzeugt wurde, durch erneute Anwendung derselben Hash-Funktion ein neuer Code erzeugt wird, oder

- ein Scrambling-Algorithmus, wobei für die Codierung der Zertifikatsreferenz ein Code verwendet wird, welcher in der Zertifikatsreferenz versteckt ist.

Zweckmässigerweise erfüllt die Codierungsfunktion folgende Bedingungen:

- sie ist reversibel, d.h. das Server-Programm ist in der Lage sein, auf Grund der Zertifikatsreferenz, welche mittels der Codierungsfunktion erzeugt wurde, den Benutzer des geheimen Schlüssels zu ermitteln,

- sie hat eine genügende Entropie, d.h. die codierte Zertifikatsreferenz ist genügend sicher sein gegen Angriffe, die versuchen, den Code zu brechen und Informationen betreffend die Identität des Benutzers des geheimen Schlüssels und/oder den öffentlichen Schlüssel, welcher zum geheimen Schlüssel gehört zu ermitteln (normalerweise ein Kompromiss zwischen Sicherheit und Kostenaufwand),

- die codierte Zertifikatsreferenz wird nach ein- oder mehrmaligem Gebrauch gewechselt,

- die codierte Zertifikatsreferenz hat vorzugsweise ein Format, das mit einem URL (Uniform Resource Locator) kompatibel ist, beispielsweise mit einem HTTP-URL, LDAP-URL, FTP-URL, o.ä..

Durch die Codierung der Zertifikatsreferenz wird verhindert, dass der codierten Zertifikatsreferenz durch den Informationsempfänger Zertifikatsinformationen, insbesondere Informationen betreffend die Identität des Benutzers des geheimen Schlüssels und/oder den öffentlichen Schlüssel, welcher zum geheimen Schlüssel gehört, entnommen werden können, oder dass der Informationsempfänger die codierte Zertifikatsreferenz mit Zertifikatsinformationen betreffend den Benutzer des geheimen Schlüssels verbinden kann. Da die codierte Zertifikatsreferenz dank des obigen Codierungsverfahrens mit jeder neuen Meldung wechselt, wird zusätzlich verhindert, dass auf Grund der Zertifikatsreferenz die Aktivitäten eines bestimmten Benutzers eines geheimen Schlüssels verfolgt werden können.

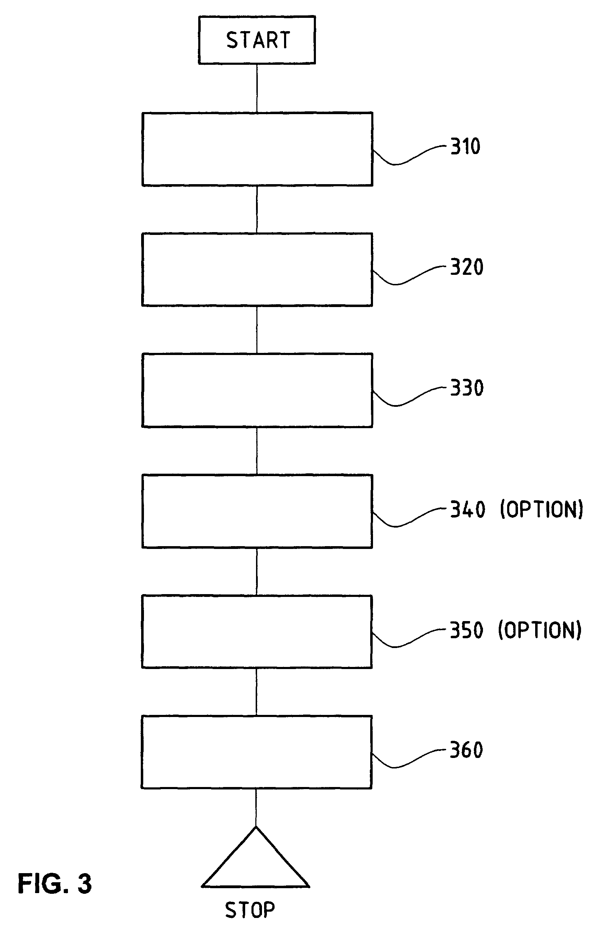

Im vorliegenden Ausführungsbeispiel übermittelt das Client-Programm 20 im Kommunikationsgerät 2 des Informationsempfängers die codierte Zertifikatsreferenz, welche das Client-Programm 10 geschickt hat, an ein Server-Programm 31 in einem Server 3 eines Zertifizierungsdiensteanbieters. Fig. 3 zeigt einen Flow Chart des Server-Programms 31. In Programmschritt 310 wird die codierte Zertifikatsreferenz decodiert oder entschlüsselt und die uncodierte Zertifikatsreferenz, beispielsweise in Form eines URL (Uniform Resource Locator), ermittelt. Je nach Codierungsfunktion kann aus der codierten Zertifikatsreferenz auch der Name oder andere Informationen ermittelt werden, welche die Identität des Benutzers des geheimen Schlüssels betreffen. In Schritt 320 wird mittels der uncodierten Zertifikatsreferenz oder anderer Informationen, welche die Identität des Benutzers des geheimen Schlüssels betreffen, das Zertifikat des Benutzers des geheimen Schlüssels aus der Datenbank 32 abgerufen. In Schritt 330 wird der Status des genannten Zertifikates ermittelt, beispielsweise, indem der Status an Hand einer Certificate Revocation List (CRL) überprüft wird. Schritt 340 ist fakultativ und betrifft die Validierung einer digitalen Unterschrift des Benutzers des geheimen Schlüssels im Auftrag des Informationsempfängers. Schritt 350 ist ebenfalls fakultativ und umfasst weitere Überprüfungen betreffend den Benutzer des geheimen Schlüssels, beispielsweise eine Überprüfung der Kreditwürdigkeit, Aktivitäten, Firmengrösse usw. des Benutzers. In Schritt 360 werden bestimmte, ausgewählte Zertifikatsinformationen betreffend den Benutzer des geheimen Schlüssels vom Server-Programm 31 an das Client-Programm 20 im Kommunikationsgerät 2 des Informationsempfängers übermittelt. Die ausgewählten Zertifikatsinformationen können beispielsweise eine oder mehrere der folgenden Informationen umfassen:

- den Status des Zertifikates des Benutzers des geheimen Schlüssels,

- implizite oder explizite Resultate weiterer Überprüfungen wie beispielsweise der Kreditwürdigkeit, wobei implizite Resultate z.B. aus einem generellen "okay" oder "nicht okay" bestehen können,

- den zum geheimen Schlüssel gehörenden öffentlichen Schlüssel,

- ein Zertifikat des Benutzers des geheimen Schlüssels, in welchem Informationen betreffend die Identität des Benutzers durch ein Pseudonym ersetzt sind,

- ein normales Zertifikat des Benutzers des geheimen Schlüssels.

Der Zertifizierungsdiensteanbieter übernimmt für den Benutzer des geheimen Schlüssels auch die Rolle des "Anonymisators" (Englisch: anonymizer). Wie weit der Benutzer des geheimen Schlüssels gegenüber dem Informationsempfänger anonym bleibt, hängt im Wesentlichen von den Zertifikatsinformationen ab, welche das Server-Programm 31 an das Client-Programm 20 übermittelt. Gegenüber dem Informationsempfänger hat der Zertifizierungsdiensteanbieter damit eine Vertrauensstellung (Rolle einer 'trusted third party'), da der Informationsempfänger sich in seinen geschäftlichen Transaktionen auf die Zertifizierungsdiensteanbieter verlässt. Der Zertifizierungsdiensteanbieter übernimmt damit einen Teil des Risikos in einer geschäftlichen Transaktion, welches im Wesentlichen von der Art der Zertifikatsinformationen abhängt, welche das Server-Programm 31 an das Client-Programm 20 übermittelt, und zunimmt, wenn der Benutzer des geheimen Schlüssels anonym bleibt.

Der Zertifizierungsdiensteanbieter hat somit in dieser Hinsicht eine Vertrauensposition (Rolle einer 'trusted third party') für den Informationsempfänger (Englisch: relying party), der sich in seinen geschäftlichen Transaktionen auf den Zertifizierungsdiensteanbieter verlässt.

In einem zweiten Ausführungsbeispiel zur vorliegenden Erfindung übernimmt der Zertifizierungsdiensteanbieter im Auftrag des Informationsempfängers die Validierung der digitalen Unterschrift des Benutzers des geheimen Schlüssels. Der erste Verfahrensschritt im zweiten Ausführungsbeispiel verläuft gleich wie im ersten Ausführungsbeispiel: Ein Benutzer eines geheimen Schlüssels schickt unter Verwendung eines Kommunikationsgerätes 1 und eines Client-Programms 10 eine Meldung an ein Client-Programm 20 im Kommunikationsgerät 2 eines Informationsempfängers. Auch die übermittelte Meldung, bestehend aus einer digitalen Unterschrift, welche unter Verwendung des geheimen Schlüssels des Benutzers erstellt wurde, einer codierten Zertifikatsreferenz und allfälligen weiteren Informationen, ist identisch aufgebaut wie im ersten Ausführungsbeispiel. Im nächsten Verfahrensschritt übermittelt das Client-Programm 20 im Kommunikationsgerät 2 des Informationsempfängers die digitale Unterschrift und die codierte Zertifikatsreferenz aus der oben erwähnten Meldung an ein Server-Programm 31 in einem Server 3 eines Zertifizierungsdienstanbieters. Abgesehen von der Validierung der Unterschrift des Benutzers des geheimen Schlüssels ist der weitere Verfahrensablauf identisch mit dem ersten Ausführungsbeispiel. Der weitere Verfahrensablauf wird an Hand von Fig. 3 erläutert. In Schritt 310 wird die codierte Zertifikatsreferenz decodiert, in Schritt 320 das Zertifikat des Benutzers des geheimen Schlüssels abgerufen, und in Schritt 330 der Status des Zertifikates überprüft. In Schritt 340 wird die digitale Unterschrift validiert, indem die Unterschrift unter Verwendung des öffentlichen Schlüssels aus dem Zertifikat des Benutzers des geheimen Schlüssels entschlüsselt wird. Mit der erfolgreichen Entschlüsselung ist die Validierung der digitalen Unterschrift abgeschlossen. Die zusätzlichen Überprüfungen in Schritt 350 sind wiederum fakultativ. In Schritt 360 werden ausgewählten Zertifikatsinformationen betreffend den Benutzer des geheimen Schlüssels vom Server-Programm 31 an das Client-Programm 20 im Kommunikationsgerät 2 des Informationsempfängers übermittelt, wobei die ausgewählten Zertifikatsinformationen im zweiten Ausführungsbeispiel auch das Resultat der Validierung der Unterschrift umfassen.

Im ersten und zweiten Ausführungsbeispiel wurde davon ausgegangen, dass die Meldung, welche vom Client-Programm 10 an das Client-Programm 20 übermittelt wird, eine digitale Unterschrift enthält. Dabei handelt es sich jedoch nur um einen Spezialfall. An Stelle der digitalen Unterschrift oder auch zusätzlich zur digitalen Unterschrift kann die Meldung andere verschlüsselte Informationen enthalten, welche ebenfalls mit dem geheimen Schlüssel des Benutzers verschlüsselt worden sind. Das Verfahren zur Validierung dieser verschlüsselten Informationen bleibt sich dabei immer gleich wie im ersten und zweiten Ausführungsbeispiel. In einer Ausführungsvariante kann die digitale Unterschrift in der erwähnten Meldung beispielsweise durch eine Authentisierungs-Antwort ersetzt sein, welche mit dem geheimen Schlüssel des betreffenden Benutzers verschlüsselt sind, z. B. nach einem Challange-Response-Verfahren.

In einer vorteilhaften Ausführungsvariante zu den obigen Ausführungsbeispielen umfasst das Server-Programm 31 ein Verrechnungsmodul, und die Bereitstellung der Zertifikatsinformationen im Server und die Übermittlung der Zertifikatsinformationen an den Informationsempfänger erfolgt gegen Verrechnung. Weiter können auch die zusätzlichen Überprüfungen, wie beispielsweise die Prüfung der Kreditwürdigkeit, und die Validierung von digitalen Unterschriften gegen Verrechnung erfolgen.

**Patentansprüche**

1. Verfahren zum Abfragen von Zertifikatsinformationen unter Verwendung von Zertifikatsreferenzen in einem Kommunikationsnetz, in welchem Kommunikationsnetz mindestens gewisse Teile der Informationen verschlüsselt übertragen werden, und für die Verschlüsselung ein Public Key-Verschlüsselungsverfahren verwendet wird, in welchem Verfahren

   eine Zertifikatsreferenz von einem Benutzer eines geheimen Schlüssels an einen Informationsempfänger geschickt wird;

   die Zertifikatsreferenz vom Informationsempfänger an einen Server eines Zertifizierungsdiensteanbieters übermittelt wird, in welchem Server Zertifikatsinformationen verwaltet werden;

   im Server auf Grund der Zertifikatsreferenz Zertifikatsinformationen bereitgestellt werden, welche Zertifikatsinformationen dem Benutzer des geheimen Schlüssels zugeordnet sind; und

   die bereitgestellten Zertifikatsinformationen, vom Server an den Informationsempfänger übermittelt werden,

   **gekennzeichnet dadurch, dass** die Zertifikatsreferenz, welche vom Benutzer des geheimen Schlüssels an den Informationsempfänger geschickt wird, mittels eines Codierungsschemas erzeugt wird, auf Grund desselben die codierte Zertifikatsreferenz nach ein- oder mehrmaligem Gebrauch gewechselt wird, und welches Codierungsschema verhindert, dass der codierten Zertifikatsreferenz durch den Informationsempfänger Zertifikatsinformationen, insbesondere Informationen betreffend die Identität des Benutzers des geheimen Schlüssels und/oder den öffentlichen Schlüssel, welcher zum geheimen Schlüssel gehört, entnommen werden können.

2. Verfahren gemäss Anspruch 1, in welchem in Informationen, welche der Benutzer des geheimen Schlüssels an den Informationsempfänger schickt, abgesehen von der Zertifikatsreferenz alle Zertifikatsinformationen automatisch entfernt werden.

3. Verfahren gemäss Anspruch 1 oder 2, in welchem die Zertifikatsinformationen, welche vom Server an den Informationsempfänger übermittelt werden, Informationen betreffend den Status eines Zertifikates enthalten, welches dem Benutzer des geheimen Schlüssels zugeordnet ist.

4. Verfahren gemäss einem der Ansprüche 1 bis 3, in welchem die Zertifikatsinformationen, welche vom Server an den Informationsempfänger übermittelt werden, ein Zertifikat enthalten, welches dem Benutzer des geheimen Schlüssels zugeordnet ist.

5. Verfahren gemäss einem der Ansprüche 1 bis 4, in welchem im Server des Zertifizierungsdiensteanbieters auf Grund der Zertifikatsreferenz zusätzliche Überprüfungen betreffend den Benutzer des geheimen Schlüssels durchgeführt werden, und das Resultat dieser Überprüfungen vom Server an den Informationsempfänger übermittelt wird.

6. Verfahren gemäss einem der Ansprüche 1 bis 5, in welchem in den Zertifikatsinformationen, welche vom Server an den Informationsempfänger übermittelt werden, Informationen betreffend die Identität des Benutzers des geheimen Schlüssels durch ein Pseudonym ersetzt sind.

7. Verfahren gemäss einem der Ansprüche 1 bis 6, in welchem vom Benutzer des geheimen Schlüssels zusätzlich zur Zertifikatsreferenz eine digitale Unterschrift, welche unter Verwendung des genannten geheimen Schlüssels erstellt wurde, an den Informationsempfänger geschickt wird.

8. Verfahren gemäss einem der Ansprüche 1 bis 7, in welchem vom Benutzer des geheimen Schlüssels zusätzlich zur Zertifikatsreferenz verschlüsselte Informationen, welche mit dem genannten geheimen Schlüssel verschlüsselt wurden, insbesondere eine digitale Unterschrift, welche unter Verwendung des genannten geheimen Schlüssels erstellt wurde, an den Informationsempfänger geschickt werden, die verschlüsselten Informationen zusammen mit der Zertifikatsreferenz vom Informationsempfänger an den Server des Zertifizierungsdiensteanbieters übermittelt werden, im Server auf Grund der Zertifikatsreferenz und der verschlüsselten Informationen die Identität des Benutzers des geheimen Schlüssels verifiziert wird, und das Resultat dieser Verifikation vom Server an den Informationsempfänger übermittelt wird.

9. Verfahren gemäss einem der Ansprüche 1 bis 8, in welchem die Bereitstellung der Zertifikatsinformationen im Server und die Übermittlung der Zertifikatsinformationen an den Informationsempfänger gegen Verrechnung erfolgt.

10. Verfahren gemäss einem der Ansprüche 1 bis 9, in welchem aus den Informationen, welche vom Benutzer des geheimen Schlüssels an den Informationsempfänger geschickt werden, abgesehen von der Zertifikatsreferenz alle Zertifikatsinformationen herausgefiltert werden, welche dem Benutzer des geheimen Schlüssels zugeordnet sind.

11. Verfahren gemäss einem der Ansprüche 1 bis 10, in welchem als Codierungsschema für die Erzeugung der codierten Zertifikatsreferenz eine Tabelle oder ein dynamisches Schema verwendet wird.

12. System zum Abfragen von Zertifikatsinformationen unter Verwendung von Zertifikatsreferenzen in einem Kommunikationsnetz, welches System Verschlüsselungsmittel und Übertragungsmittel umfasst, um im Kommunikationsnetz mindestens gewisse Teile der Informationen verschlüsselt zu übertragen, und die zu verschlüsselnden Informationen mit einem Public Key-Verschlüsselungsverfahren zu verschlüsseln, welches System weiter einen Server eines Zertifizierungsdiensteanbieters umfasst, in welchem Server Zertifikatsinformationen verwaltet werden, und Übermittlungsmittel, um eine Zertifikatsreferenz von einem Benutzer eines geheimen Schlüssels an einen Informationsempfänger zu schicken, und die Zertifikatsreferenz vom Informationsempfänger an den genannten Server weiterzuleiten, und der Server Mittel umfasst, um auf Grund der Zertifikatsreferenz Zertifikatsinformationen bereit zu stellen, welche Zertifikatsinformationen dem Benutzer des geheimen Schlüssels zugeordnet sind, und die bereitgestellten Zertifikatsinformationen vom Server an den Informationsempfänger zu übermitteln, **gekennzeichnet dadurch, dass** das System ein Codierungsmodul umfasst, um mittels eines Codierungsschemas die vom Benutzer des geheimen Schlüssels an den Informationsempfänger geschickte Zertifikatsreferenz zu erzeugen, welches Codierungsschema dazu dient, die codierte Zertifikatsreferenz nach ein- oder mehrmaligem Gebrauch zu wechseln, und zu verhindern, dass der codierten Zertifikatsreferenz durch den Informationsempfänger Zertifikatsinformationen, insbesondere Informationen betreffend die Identität des Benutzers des geheimen Schlüssels und/oder den öffentlichen Schlüssel, welcher zum geheimen Schlüssel gehört, entnommen werden können.

13. System gemäss Anspruch 12, **gekennzeichnet dadurch, dass** das System Filtermittel umfasst, um in Informationen, welche der Benutzer des geheimen Schlüssels an den Informationsempfänger schickt, abgesehen von der Zertifikatsreferenz alle Zertifikatsinformationen herauszufiltern, welche dem Benutzer des geheimen Schlüssels zugeordnet sind.

14. System gemäss Anspruch 12 oder 13, in welchem die Zertifikatsinformationen, welche vom Server an den Informationsempfänger übermittelt werden, Informationen betreffend den Status eines Zertifikates enthalten, welches dem Benutzer des geheimen Schlüssels zugeordnet ist.

**15.** System gemäss einem der Ansprüche 12 bis 14, in welchem die Zertifikatsinformationen, welche vom Server an den Informationsempfänger übermittelt werden, ein Zertifikat enthalten, welches dem Benutzer des geheimen Schlüssels zugeordnet ist.

**16.** System gemäss einem der Ansprüche 12 bis 15, **gekennzeichnet dadurch, dass** der Server des Zertifizierungsdiensteanbieters zusätzliche Mittel umfasst, um auf Grund der Zertifikatsreferenz zusätzliche Überprüfungen betreffend den Benutzer des geheimen Schlüssels durchzuführen, und das Resultat dieser Überprüfungen vom Server an den Informationsempfänger zu übermitteln.

**17.** System gemäss einem der Ansprüche 12 bis 16, **gekennzeichnet dadurch, dass** der Server des Zertifizierungsdiensteanbieters zusätzliche Mittel umfasst, um in den Zertifikatsinformationen, welche vom Server an den Informationsempfänger übermittelt werden, Informationen betreffend die Identität des Benutzers des geheimen Schlüssels durch ein Pseudonym zu ersetzen.

**18.** System gemäss einem der Ansprüche 12 bis 17, **gekennzeichnet dadurch, dass** die Übermittlungsmittel weiter dazu dienen, um zusätzlich zur Zertifikatsreferenz eine digitale Unterschrift, welche unter Verwendung des genannten geheimen Schlüssels erstellt wurde, vom Benutzer des geheimen Schlüssels an den Informationsempfänger zu schicken.

**19.** System gemäss einem der Ansprüche 12 bis 18, **gekennzeichnet dadurch, dass** die Systemmittel weiter dazu dienen, um zusätzlich zur Zertifikatsreferenz verschlüsselte Informationen, welche mit dem genannten geheimen Schlüssel verschlüsselt wurden, insbesondere eine digitale Unterschrift, welche unter Verwendung des genannten geheimen Schlüssels erstellt wurde, vom Benutzer des geheimen Schlüssels an den Informationsempfänger zu schicken, die verschlüsselten Informationen zusammen mit der Zertifikatsreferenz vom Informationsempfänger an den Server des Zertifizierungsdiensteanbieters weiterzuleiten, im Server auf Grund der Zertifikatsreferenz und der verschlüsselten Informationen die Identität des Benutzers des geheimen Schlüssels zu verifizieren, und das Resultat dieser Verifikation vom Server an den Informationsempfänger zu übermitteln.

**20.** System gemäss einem der Ansprüche 12 bis 19, **gekennzeichnet dadurch, dass** der genannte Server des Zertifizierungsdiensteanbieters ein Verrechnungsmodul umfasst, um die Bereitstellung der Zertifikatsinformationen im Server und die Übermittlung der Zertifikatsinformationen an den Informationsempfänger zu verrechnen.

**21.** System gemäss einem der Ansprüche 12 bis 20, in welchem als Codierungsschema eine Tabelle oder ein dynamisches Schema verwendet wird.

**Claims**

**1.** Method for querying certificate data using certificate references in a communication network, in which communication network at least certain parts of the data are transmitted in an encrypted way, and used for the encryption is a public key encryption method, in which method

a certificate reference is sent from a user of a secret key to an information recipient; the certificate reference is transmitted from the information recipient to a server of a certification service provider, in which server certificate data are administered; certificate data are prepared in the server on the basis of the certificate reference, which certificate data are assigned to the user of the secret key; and the prepared certificate data are transmitted from the server to the information recipient,

**characterised in that** the certificate reference, which is sent from the user of the secret key to the information recipient, is generated by means of a coding scheme, on the basis of the same the coded certificate reference is changed after single or multiple use, and which coding scheme prevents certificate data, in particular information relating to the identity of the user of the secret key and/or the public key, which belongs to the secret key, from being able to be learned by the information recipient from the coded certificate reference.

**2.** Method according to claim 1, wherein all certificate data are automatically removed in data which the user of the secret key sends to the information recipient, except for the certificate reference.

**3.** Method according to claim 1 or 2, wherein the certificate data which are transmitted from the server to the information recipient contain information relating to the status of a certificate assigned to the user of the secret key.

**4.** Method according to one of the claims 1 to 3, wherein the certificate data which are transmitted from the server to the information recipient contain a certificate assigned to the user of the secret key.

**5.** Method according to one of the claims 1 to 4, wherein additional checks concerning the user of the secret key are carried out in the server of the certification service provider on the basis of the certificate reference, and the result of these checks is transmitted from the server to the information recipient.

6. Method according to one of the claims 1 to 5, wherein in the certificate data which are transmitted from the server to the information recipient data concerning the identity of the user of the secret key are replaced with a pseudonym.

7. Method according to one of the claims 1 to 6, wherein sent to the information recipient from the user of the secret key, in addition to the certificate reference, is a digital signature created using said secret key.

8. Method according to one of the claims 1 to 7, wherein sent to the information recipient from the user of the secret key in addition to the certificate reference are encrypted data which have been encrypted with said secret key, in particular a digital signature, which was created using said secret key, the encrypted data are transmitted, together with the certificate reference, from the information recipient to the server of the certification service provider, the identity of the user of the secret key is verified in the server on the basis of the certificate reference and the encrypted data, and the result of this verification is transmitted from the server to the information recipient.

9. Method according to one of the claims 1 to 8, wherein the preparation of the certificate data in the server and the transmission of the certificate data to the information recipient takes place against billing.

10. Method according to one of the claims 1 to 9, wherein all certificate data assigned to the user of the secret key, except for the certificate reference, are filtered out of the data which are sent from the user of the secret key to the information recipient.

11. Method according to one of the claims 1 to 10, wherein a table or a dynamic scheme is used as coding scheme for generation of the coded certificate reference.

12. System for querying certificate data using certificate references in a communication network, which system comprises encryption means and transmission means, in order to transmit in the communication network at least certain parts of the data in an encrypted way, and to encrypt the data to be encrypted with a public key encryption method, which system further comprises a server of a certification service provider, in which server certificate data are administered, and transmission means to send a certificate reference from a user of a secret key to an information recipient, and to forward the certificate reference from the information recipient to said server, and the server comprises means of preparing certificate data on the basis of the certificate reference, which certificate data are assigned to the user of the secret key, and to transmit the prepared certificate data from the server to the information recipient, **characterised**

**in that** the system comprises a coding module in order to generate by means of a coding scheme the certificate reference sent from the user of the secret key to the information recipient, which coding scheme serves the purpose of changing the coded certificate reference after single or multiple use, and of preventing certificate data, in particular information relating to the identity of the user of the secret key and/or the public key, which belongs to the secret key, from being able to be learned by the information recipient from the coded certificate reference.

13. System according to claim 12, **characterised in that** the system comprises filter means in order to filter out in data which the user of the secret key sends to the information recipient all certificate data assigned to the user of the secret key, except for the certificate reference.

14. System according to claim 12 or 13, wherein the certificate data which are sent from the server to the information recipient contain information relating to the status of a certificate assigned to the user of the secret key.

15. System according to one of the claims 12 to 14, wherein the certificate data which are sent from the server to the information recipient contain a certificate which is assigned to the user of the secret key.

16. System according to one of the claims 12 to 15, **characterised in that** the server of the certification service provider comprises additional means in order to carry out additional checks relating to the user of the secret key on the basis of the certificate reference, and to transmit the result of these checks from the server to the information recipient.

17. System according to one of the claims 12 to 16, **characterised in that** the server of the certification service provider comprises additional means in order to replace in the certificate data which are transmitted from the server to the information recipient data relating to the identity of the user of the secret key with a pseudonym.

18. System according to one of the claims 12 to 17, **characterised in that** the transmission means further serve the purpose of sending to the information recipient from the user of the secret key, in addition to the certificate reference, a digital signature created using said secret key.

19. System according to one of the claims 12 to 18, **characterised in that** the system means serve the purpose furthermore of sending to the information recipient from the user of the secret key, in addition to the certificate reference, encrypted data which have been encrypted with said secret key, in particular a digital signature created using said secret key, of forwarding the encrypted data, together with the certificate reference, from the information recipient to the server of the certification service provider, of verifying in the server on the basis of the certificate reference and the encrypted data the identity of the user of the secret key, and of transmitting the result of this verification from the server to the information recipient.

20. System according to one of the claims 12 to 19, **characterised in that** said server of the certification service provider comprises a billing module in order to bill for the preparation of the certificate data in the server and the transmission of the certificate data to the information recipient.

21. System according to one of the claims 12 to 30, wherein a table or a dynamic scheme is used as the coding scheme.

**Revendications**

1. Procédé pour l'interrogation d'informations de certificat uitlisant des références de certificat dans un réseau de communication, réseau de communication dans lequel au moins certaines parties des informations sont transmises sous forme codée et pour le cryptage un procédé de cryptage de clé publique étant utilisé, procédé dans lequel

une référence de certificat est envoyée par un utilisateur d'une clé secrète à un récepteur d'information;

la référence de certificat est transmise par le récepteur d'information à un serveur d'un fournisseur de service de certification serveur dans lequel sont administrées des informations de certificat;

dans le serveur sur la base des références de certificat des informations de certificat sont préparées, informations de certificat qui sont attribuées à l'utilisateur de la clé secrète : et

les informations de certificat préparées sont transmises au récepteur d'information,

**caractérisé en ce que** la référence de certificat qui est envoyée par l'utilisateur de la clé secrète au récepteur d'informations, est générée au moyen d'un schéma de codification, sur la base duquel la référence de certificat codée est changée après un usage unique ou multiple et schéma de codification qui empêche que la référence de certificat, en particulier les informations concernant l'identité de l'utilisateur de la clé secrète et/ou de la clé publique qui fait partie de la clé secrète puissent être déduites.

2. Procédé selon la revendication 1, dans lequel parmi les informations que l'utilisateur de la clé secrète envoie au récepteur d'informations, toutes les informations de certificat sont supprimées à l'exception de la référence de certificat.

3. Procédé selon la revendication 1 ou 2, dans lequel les informations de certificat qui sont transmises par le serveur au récepteur d'informations, contiennent des informations de certificat concernant le statut d'un certificat qui est attribué à l'utilisateur de la clé secrète.

4. Procédé selon l'une des revendications 1 à 3, dans lequel les informations de certificat qui sont transmises par le serveur au récepteur d'informations contiennent un certificat qui est attribué à l'utilisateur de la clé secrète.

5. Procédé selon l'une des revendications 1 à 4, dans lequel des contrôles supplémentaires concernant l'utilisateur de la clé secrète sont effectués dans le serveur du fournisseur de service de certification sur la base de la référence de certificat et le résultat de ces contrôles est transmis par le serveur au récepteur d'informations.

6. Procédé selon l'une des revendications 1 à 5, dans lequel dans les informations de certificat qui sont transmises par le serveur au récepteur d'informations, des informations concernant l'identité de l'utilisateur de la clé secrète sont remplacées par un pseudonyme.

7. Procédé selon l'une des revendications 1 à 6, dans lequel une signature numérique est envoyée au récepteur d'information par l'utilisateur de la clé secrète en plus de la référence de certificat, signature qui a été établie en utilisant ladite clé secrète.

8. Procédé selon l'une des revendications 1 à 7, dans lequel l'utilisateur de la clé secrète envoie au récepteur d'information en supplément de la référence de certificat des informations codées qui sont codées avec ladite clé secrète, en particulier une signature numérique qui a été établie en utilisant ladite clé secrète, dans lequel les informations codées sont transmises ensemble avec la référence de certificat par le récepteur d'informations au serveur du fournisseur de service de certification, dans lequel l'identité de l'utilisateur de la clé secrète est vérifiée dans le serveur sur la base de la référence de certificat et des informations codées et le résultat de cette vérification est transmis par le serveur au récepteur d'information.

9. Procédé selon l'une des revendications 1 à 8, dans lequel la mise à disposition des informations de certificat s'effectue dans le serveur et la transmission des informations de certificat s'effectue contre facturation au récepteur d'informations.

10. Procédé selon l'une des revendications 1 à 9, dans lequel à partir des informations qui sont envoyées par l'utilisateur de la clé secrète au récepteur d'informations, toutes les informations de certification à l'exception de la référence de certificat sont filtrées lesquelles sont attribuées à l'utilisateur de la clé secrète.

11. Procédé selon l'une des revendications 1 à 10, dans lequel pour la génération de la référence de certificat codée il est utilisé en tant que schéma de codification un tableau ou un schéma dynamique.

12. Système pour l'interrogation d'informations de certificat uitlisant des références de certificat dans un réseau de communication, système qui comprend des moyens de cryptage et des moyens de transmission, pour transmettre dans le réseau de communication au moins certaines parties des informations codées et pour coder les informations à crypter avec un procédé de codage de clé publique, système qui comprend en outre un serveur d'un fournisseur de service de certification serveur dans lequel sont administrées des informations de certificat et qui comprend des moyens de transmission pour envoyer une référence de certificat par un utilisateur d'une clé secrète à un récepteur d'informations et transmettre la référence de certificat par le récepteur d'informations audit serveur, et le serveur comprend des moyens pour mettre à disposition sur la base de la référence de certificat des informations de certificat, informations de certificat qui sont attribuées à l'utilisateur de la clé secrète et pour transmettre les informations de certificat mises à disposition par le serveur au récepteur d'informations, **caractérisé en ce que**

le système comprend un module de cryptage pour générer au moyen d'un schéma de codage la référence de certificat envoyée par l'utilisateur de la clé secrète au récepteur d'informations, schéma de codage qui sert à changer la référence de certificat codée après un usage unique ou multiple et à empêcher que des informations de certificat en particulier des informations concernant l'identité de l'utilisateur de la clé secrète et/ou de la clé publique faisant partie de la clé secrète puissent être déduites de la référence de certificat codée par le récepteur d'informations.

13. Système selon la revendication 12, **caractérisé en ce que** le système comprend des moyens de filtrage pour filtrer dans des informations que l'utilisateur de la clé secrète envoie au récepteur d'informations, à l'exception de la référence de certificat toutes les informations de certificat qui sont associées à l'utilisateur de la clé secrète.

14. Système selon la revendication 12 ou 13, dans lequel les informations de certificat qui sont transmises par le serveur au récepteur d'informations contiennent des informations concernant le statut d'un certificat qui est associé à l'utilisateur de la clé secrète.

15. Système selon l'une des revendications 12 à 14, dans lequel les informations de certificat qui sont transmises par le serveur au récepteur d'informations contiennent un certificat qui est associé à l'utilisateur de la clé secrète.

16. Système selon l'une des revendications 12 à 15, dans lequel le serveur du fournisseur de service de certification comprend des moyens supplémentaires pour effectuer sur la base de la référence de certificat des contrôles supplémentaires relatifs à l'utilisateur de la clé secrète et pour transmettre le résultat de ces contrôles par le serveur au récepteur d'informations.

17. Système selon l'une des revendications 12 à 16, **caractérisé en ce que** le serveur du fournisseur de service de certification comprend des moyens supplémentaires pour remplacer dans les informations de certificat qui sont transmises par le serveur au récepteur d'informations, des informations relatives à l'identité de l'utilisateur de la clé secrète par un pseudonyme.

18. Système selon l'une des revendications 12 à 17, **caractérisé en ce que** les moyens de transmission servent en outre à envoyer par l'utilisateur de la clé secrète au récepteur d'informations en supplément de la référence de certificat une signature numérique qui a été établie en utilisant ladite clé secrète.

19. Système selon l'une des revendications 12 à 18, **caractérisé en ce que** les moyens de système servent en outre à envoyer par l'utilisateur de la clé secrète au récepteur d'informations en supplément de la référence de certificat, des informations cryptées en particulier une signature numérique qui a été établie en utilisant ladite clé secrète, à transmettre les informations cryptées ensemble avec la référence de certificat par le récepteur d'informations au serveur du fournisseur de service de certification, à vérifier dans le serveur sur la base de la référence de certificat et des informations cryptées, l'identité de l'utilisateur de la clé secrète et à transmettre le résultat de cette vérification par le serveur au récepteur d'informations.

20. Système selon l'une des revendications 12 à 19 **caractérisé en ce que** ledit serveur du fournisseur de service de certification comprend un module de facturation pour facturer la mise à disposition des informations de certificat dans le serveur et la transmission des informations de certificat au récepteur d'informations.

21. Système selon l'une des revendications 12 à 20 dans lequel en tant que schéma de codification il est utilisé un tableau ou un schéma dynamique.

**FIG. 1**

FIG. 2

EP 1 248 432 B1

START

310

320

330

340 (OPTION)

350 (OPTION)

360

**FIG. 3**

STOP